# DEMANDE DE BREVET EUROPEEN

(11) **EP 1 447 732 A1**
(43) Date de publication de la demande: **18.08.2004**
(21) Numéro de dépôt: 04290377.3
(22) Date de dépôt: 12.02.2004
(51) Int. Cl.: G05G 25/04, F16H 59/02

(54) **Garniture de levier de commande de vitesse à grand débattement**

(30) Priorité: 12.02.2003 FR 0301681
(71) Demandeur: Renault s.a.s., 92100 Boulogne Billancourt (FR)
(72) Inventeur: Gallinato-Contino, Roland, 83780 Flayosc (FR); Petiot, Michel, 92370 Chaville (FR)

(57) **Abrégé**

L'invention concerne une garniture de levier de commande de vitesse. Ladite garniture comprend une première (16) et une seconde (28) pièces de symétrie sphérique formant bols, adaptées à coopérer et présentant chacune une partie de fond, ladite première pièce (16), dont la partie de fond présente une ouverture (26) et dont la surface concave est disposée en regard dudit boîtier de commande (10), étant montée en position fixe par rapport audit boîtier de commande (10), ladite seconde pièce (28) dont ladite partie de fond (30) est solidaire dudit levier de commande (12) qui la traverse, étant montée mobile par rapport à ladite première pièce (16). Ladite seconde pièce (28) comprend une première portion circulaire périphérique rigide (34) adaptée à coopérer avec ladite première pièce (16) et une seconde portion centrale (38) définissant une surface moyenne (S2) et qui est déformable selon des directions tangentes à ladite surface moyenne (S2).

## Description

La présente invention se rapporte à une garniture de levier de commande de vitesse à grand débattement, notamment mais non exclusivement, pour les véhicules automobiles.

On connaît des garnitures de levier de commande de vitesse, dont lesdits leviers sont montés articulés dans un boîtier de commande, en saillie dudit boîtier de commande et éventuellement en saillie d'une ouverture d'un habillage environnant.

Ladite garniture comprend généralement deux pièces adaptées à coopérer ensemble. Une première pièce présentant éventuellement une forme de bol renversé, dont la surface concave est orientée en regard dudit boîtier de commande et dont la partie de fond présente une ouverture que ledit levier de commande traverse, et une seconde pièce également en forme de bol renversé, encastrée dans ladite première pièce contre sa surface concave pour masquer ladite ouverture et dont la partie de fond est solidaire en débattement dudit levier de commande qui la traverse. Par ailleurs, cette seconde pièce est maintenue en appui contre la paroi interne de la première pièce grâce à des moyens élastiques disposés entre ledit boîtier de commande et ladite seconde pièce et maintenus en compression contre la surface interne de cette seconde pièce.

De la sorte, l'entraînement dudit levier de commande en pivotement dont la course est limitée par le bord de ladite ouverture est adapté à entraîner la surface convexe de ladite seconde pièce en frottement contre ledit bord tout en obturant ladite ouverture dans toutes les positions dudit levier de commande.

Ainsi, lesdites pièces forment un joint entre le boîtier de commande et le levier de commande mobile en pivotement, ledit joint permettant de limiter la pénétration des corps étrangers dans ledit boîtier de commande. On se référera, notamment au document US 3 971 564 qui décrit une telle garniture.

Un problème qui se pose et que vise à résoudre la présente invention est non seulement de préserver le boîtier de commande des particules de faible taille et/ou des poussières, mais aussi de permettre un grand débattement angulaire du levier de commande dont la course est limitée par le bord de ladite ouverture, notamment lorsque le boîtier de commande est éloigné de ladite ouverture, par exemple lorsque l'ouverture doit déboucher sur une planche de bord et non dans un plancher, sans pour autant entraîner un grand déplacement de ladite seconde pièce par rapport à ladite première pièce.

A cet effet la présente invention propose une garniture de levier de commande de vitesse, ledit levier de commande étant monté articulé dans un boîtier de commande et en saillie dudit boîtier de commande. Ladite garniture comprend une première et une seconde pièces de symétrie sphérique formant bols renversés, adaptées à coopérer ensemble et présentant chacune une partie de fond. Ladite première pièce, dont la partie de fond présente une ouverture et dont la surface concave est disposée en regard dudit boîtier, est montée en position fixe par rapport audit boîtier de commande, ledit levier de commande traversant ladite ouverture. Ladite seconde pièce dont ladite partie de fond est solidaire dudit levier de commande qui la traverse est montée mobile par rapport à ladite première pièce et obture ladite ouverture, et elle comprend une première portion circulaire périphérique rigide adaptée à coopérer avec ladite première pièce et une seconde portion centrale définissant une surface moyenne et qui est déformable selon des directions tangentes à ladite surface moyenne. Ladite seconde portion s'étend radialement entre ladite partie de fond, dont ledit levier de commande est solidaire et ladite première portion périphérique, ledit levier de commande étant mobile par rapport à ladite première portion.

Ainsi, une caractéristique de l'invention réside dans la structure de ladite seconde pièce qui présente une portion centrale déformable dont est solidaire le levier de commande et qui est adaptée à coopérer avec une première pièce dont les dimensions de l'ouverture sont susceptibles d'être supérieures aux dimensions des ouvertures des pièces de l'art antérieur.

De la sorte, d'une part le levier de commande est apte à pivoter entre deux positions extrêmes formant un grand angle et d'autre part, grâce à ladite portion centrale, l'amplitude de déplacement de ladite seconde pièce peut être limitée aux dimensions de ladite première pièce, puisque lorsque ladite première portion est en butée, ledit levier de commande peut encore être entraîné et déformer ladite seconde portion, comme on l'expliquera plus en détail dans la suite de la description.

Selon un mode de mise en oeuvre de l'invention particulièrement avantageux, ladite seconde portion circulaire déformable est constituée d'un corps plissé formant soufflet. Grâce à cette caractéristique, la déformation de ladite portion s'effectue, lorsque le levier de commande est entraîné en mouvement, par resserrement des plis dans la zone comprise entre ledit levier de commande et ladite première portion, ce qui provoque l'élongation des plis de la zone de ladite seconde portion opposée par rapport audit levier de commande.

Ledit corps plissé permet de réaliser une seconde portion déformable à un coût avantageux.

Selon un premier mode de réalisation de l'invention particulièrement avantageux, ladite première pièce présente un logement sensiblement circulaire débouchant dans le bord de ladite ouverture et dans lequel ladite portion périphérique rigide est adaptée à être engagée. Préférentiellement, ladite portion périphérique rigide est montée coulissante dans ledit logement.

De la sorte, lorsque le levier de commande est entraîné en pivotement, pour engager une vitesse à partir d'une position centrale correspondant au point mort et dans laquelle la première portion est libre en translation par rapport à la première pièce selon des directions incluses dans la surface moyenne qu'elle définit, la seconde portion déformable est suffisamment rigide pour entraîner la première portion dans ledit logement. Ainsi, la portion périphérique rigide est non seulement susceptible d'être protégée dans ledit logement mais en plus elle est guidée en translation par lui.

En outre, comme on l'expliquera plus en détail dans la description qui va suivre, ledit logement constitue une double enveloppe permettant d'assurer une complète étanchéité de la garniture vis-à-vis de l'extérieur et en particulier pour les poussières.

Afin d'accroître plus encore cette étanchéité, de façon tout à fait avantageuse, le bord de ladite ouverture de la partie de fond de ladite première pièce et le bord libre de ladite première portion circulaire périphérique rigide présentent des moyens d'arrêt destinés à bloquer en translation ledit bord libre par rapport au bord de ladite ouverture dans des directions opposées.

Ainsi, la première portion circulaire est, dans toutes les positions possibles du levier de commande, solidaire du bord de l'ouverture et aucune particule ne peut pénétrer sous la seconde pièce à travers l'ouverture.

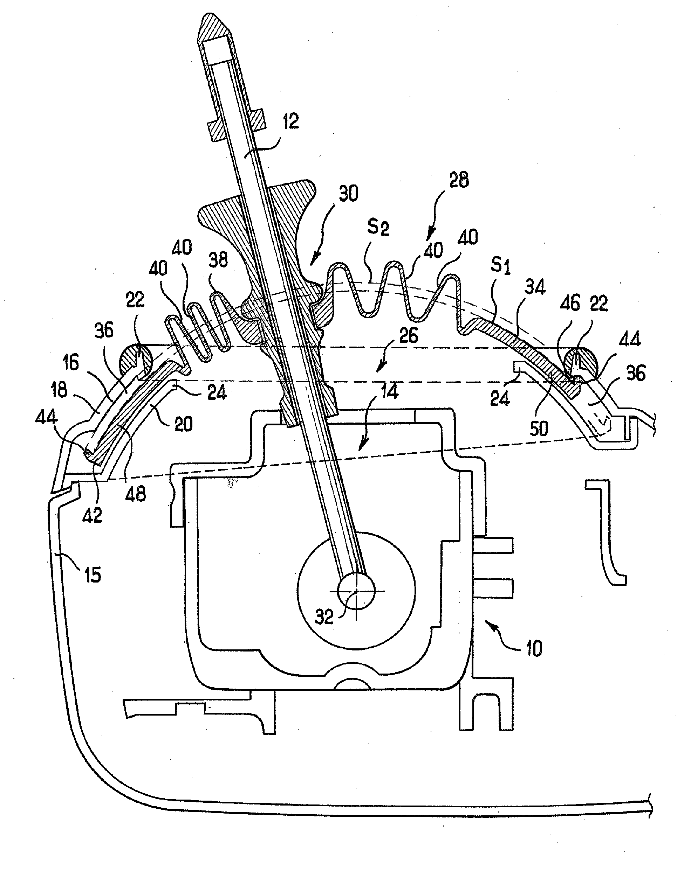

D'autres particularités et avantages de l'invention ressortiront à la lecture de la description faite ci-après d'un mode de réalisation particulier de l'invention, donné à titre indicatif mais non limitatif, en référence au dessin annexé sur lequel : l'unique Figure est une vue schématique en coupe verticale d'une garniture de commande de vitesse conforme à l'invention.

La Figure illustre un boîtier de commande 10 de vitesse logée dans le tableau de bord d'un véhicule automobile, sur lequel est monté à pivotement un levier de commande 12 qui fait saillie d'une première ouverture 14, délimitée sur la Figure par un trait interrompu et ménagée dans la planche de bord 15 du véhicule, ledit levier de commande 12 et la planche de bord du véhicule étant reliés ensemble par une garniture conforme à l'invention.

La garniture comporte une première pièce de symétrie sphérique formant un premier bol renversé 16 dont le plus grand diamètre coïncide avec la première ouverture 14 et qui est relié à la planche de bord.

Le premier bol renversé 16 est constitué de deux anneaux sphériques 18, 20, concentriques maintenus espacés l'un de l'autre, dont les bords rapprochés 22, 24 de plus petit diamètre forme une lèvre et dont les bords les deux autres bords de plus grand diamètre sont reliés ensemble et montés en position fixe dans le pourtour de la première ouverture 14.

Les bords rapprochés 22, 24 délimitent une seconde ouverture 26 qui est obturée par une seconde pièce de symétrie sphérique formant un second bol renversé 28 dont une partie de fond 30 est solidaire du levier de commande 12; au moins en débattement c'est-à-dire selon des directions sensiblement comprises dans une première surface moyenne S1 définie par la seconde pièce et que l'on va détailler ci-après.

Le second bol renversé 28 et les anneaux sphériques 18, 20, sont orientés de façon que leur surface soit en regard du boîtier de commande 10. En outre, leur centre de courbure est sensiblement confondu avec le point de pivotement 32 du levier de commande 12.

Une caractéristique de l'invention réside dans la structure du second bol renversé 28 qui est constitué d'une première portion circulaire périphérique rigide 34, adaptée à être engagée dans un logement 36 défini par les deux anneaux sphériques 18, 20, et d'une seconde portion centrale déformable 38 selon des directions tangentes à une surface moyenne S2, parallèle à S1.

La seconde portion centrale déformable 38 est formée par un corps plissé dont les plis concentriques 40 sont reliés ensemble par leurs extrémités respectives ; les plis étant respectivement articulés les uns par rapport aux autres. Le centre commun des plis concentriques 40 est situé dans la partie de fond 30 du second bol renversé 28, d'où fait saillie le levier de commande 12.

Par ailleurs, le bord libre 42 de la première portion circulaire périphérique rigide 34 présente des moyens d'arrêt formés d'un premier ergot circulaire 44 en saillie de la surface convexe destinés à venir en butée contre un second ergot circulaire antagoniste 46 en saillie de la surface concave de l'anneau sphérique 18 externe pour bloquer en translation ledit bord libre 42 par rapport aux bords rapprochés 22, 24 de la seconde ouverture 26 dans une direction opposée.

Selon un premier mode de réalisation, le second bol renversé 38 est réalisé en surmoulant un élément rigide correspondant à la première portion circulaire périphérique rigide 34 avec une matière plastique élastiquement déformable, par exemple du polyuréthanne.

Selon un autre mode de réalisation, le second bol renversé 38 est moulé d'une seule pièce en matière plastique, la première portion 34 présentant une épaisseur supérieure à celle des plis 40. Ainsi, la première portion 34 est suffisamment rigide et les plis 40 sont mobiles en rotation respectivement les uns par rapport aux autres.

Tel qu'illustrée sur la Figure, le second bol renversé 38 présente une partie 48 de première portion 34 engagée entièrement et bloquée en translation dans le logement 36, et une partie 50 diamétralement opposée entièrement dégagée dudit logement 36, tandis que le premier ergot circulaire 44 est en butée contre le second ergot circulaire antagoniste 46. En outre, la partie de seconde portion 38 prolongeant la partie 48 est partiellement comprimée de sorte que les plis 40 sont resserrés alors que dans la partie diamétralement opposée les plis 40 sont comparativement espacés les uns des autres.

On comprend aisément que le boîtier de commande est parfaitement isolé vis-à-vis de l'extérieur par rapport aux particules ou aux poussières car d'une part la première portion rigide 34 qui est continue avec la seconde portion 38, est en contact glissant avec le bord 22 de l'anneau sphérique 18, le plus externe, ce qui forme une première barrière, et d'autre part, l'autre anneau sphérique 18, le plus interne, constitue une seconde barrière vis-à-vis des particules.

En outre, en combinant à la fois une première portion rigide 34 de bol renversé 28 apte à pivoter par rapport à un premier bol renversé 16 dont l'ouverture 26 est grande et une portion déformable 38 on obtient une grande amplitude de débattement angulaire du levier de commande 12. Cette caractéristique est particulièrement recherchée pour les commandes au volant reliées à la planche de bord.

En effet, dans ce cas les bols doivent être relativement petits pour occuper un espace restreint sur la planche de bord tout en permettant un débattement normal du levier de commande. En conséquence, les dimensions des bols doivent être voisines des dimensions de l'ouverture ménagée dans la planche de bord. L'objet de l'invention permet une telle configuration.

## Revendications

1. Garniture de levier de commande de vitesse, ledit levier de commande (12) étant monté articulé dans un boîtier de commande (10) et en saillie dudit boîtier de commande (10), ladite garniture comprenant une première (16) et une seconde (28) pièces de symétrie sphérique formant bols renversés, adaptées à coopérer ensemble et présentant chacune une partie de fond, ladite première pièce (16), dont la partie de fond présente une ouverture (26) et dont la surface concave est disposée en regard dudit boîtier de commande (10), étant montée en position fixe par rapport audit boîtier de commande (10), ledit levier de commande (12) traversant ladite ouverture (26) et ladite seconde pièce (28) dont ladite partie de fond (30) est solidaire dudit levier de commande (12) qui la traverse, étant montée mobile par rapport à ladite première pièce (16) et étant destinée à obturer ladite ouverture (26),
**caractérisée en ce que** ladite seconde pièce (28) comprend une première portion circulaire périphérique rigide (34) adaptée à coopérer avec ladite première pièce (16) et une seconde portion centrale (38) définissant une surface moyenne (S2) et qui est déformable selon des directions tangentes à ladite surface moyenne (S2), ladite seconde portion centrale (38) s'étendant radialement entre ladite partie de fond (30), dont ledit levier de commande (12) est solidaire et ladite première portion circulaire périphérique rigide (34), ledit levier de commande (12) étant mobile par rapport à ladite première portion circulaire périphérique rigide (34).

2. Garniture de levier de commande de vitesse selon la revendication 1, **caractérisée en ce que** ladite seconde portion centrale (38) déformable est constituée d'un corps plissé formant soufflet.

3. Garniture de levier de commande de vitesse selon la revendication 1 ou 2, **caractérisée en ce que** ladite première pièce (16) présente un logement (36) sensiblement circulaire débouchant dans le bord de ladite ouverture (26) et dans lequel ladite portion circulaire périphérique rigide (34) est adaptée à être engagée.

4. Garniture de levier de commande de vitesse selon la revendication 3, **caractérisée en ce que** ladite portion circulaire périphérique rigide (34) est montée coulissante dans ledit logement (36).

5. Garniture de levier de commande de vitesse selon l'une quelconque des revendications 1 à 4, **caractérisée en ce que** le bord de ladite ouverture (26) de la partie de fond de ladite première pièce (16) et le bord libre de ladite première portion circulaire périphérique rigide (34) présentent des moyens d'arrêt (44, 46) destinés à bloquer en translation ledit bord libre par rapport au bord de ladite ouverture dans des directions opposées.
